# FASCICULE DE BREVET EUROPEEN

(11) **EP 1 583 872 B1**
(45) Date de publication et mention de la délivrance du brevet: **02.06.2010**
(21) Numéro de dépôt: 03799613.9
(22) Date de dépôt: 17.12.2003
(51) Int. Cl.: E01B 25/28

(54) **AIGUILLAGE TALONNABLE POUR CIRCUIT DE GUIDAGE A MONORAIL**
FEDERWEICHE FÜR EINE FÜHRUNGSSCHIENE
SPRING SWITCH FOR A MONORAIL GUIDE CIRCUIT

(30) Priorité: 15.01.2003 FR 0300405
(43) Date de publication de la demande: 12.10.2005
(73) Titulaire: LOHR INDUSTRIE S.A., F-67980 Hangenbieten (FR)
(72) Inventeur: ANDRE, Jean-Luc, F-67120 Molsheim (FR)
(74) Mandataire: Metz, Paul
(86) Numéro de dépôt international: PCT/FR2003/003771
(87) Numéro de publication internationale: WO 2004/071838

(56) Documents cités:
- EP-A- 0 844 329
- US-A- 3 180 280

## Description

La présente invention se rapporte à un dispositif mécanique automatique de rabattement de l'organe mobile d'orientation d'un aiguillage, l'actionnement en rabattement de l'organe mobile d'orientation portant l'ensemble mobile d'un aiguillage talonnable placé dans le circuit de guidage par un monorail sur lequel roulent les galets d'un ensemble de guidage pour un véhicule routier.

Le circuit de guidage d'un véhicule routier par un ensemble de guidage à galets roulant sur un monorail comprend des portions d'un monorail de guidage et des appareils de voie situés à des croisements. Ces appareils de voies sont principalement des aiguillages.

Un aiguillage est constitué d'une partie fixe solidaire de la chaussée et d'une partie mobile ou organe d'orientation qui permet de choisir une des voies possibles soit directe soit déviée.

Un aiguillage comprend traditionnellement à ses extrémités d'une part à l'une d'entre elles une pointe et d'autre part à l'autre d'entre elles un talon. La zone à une seule voie est la pointe ou "l'entrée d'aiguillage" qui comporte un rail simple et la zone opposée comprenant l'amorce de la voie directe et celle de la voie déviée s'appelle le talon ou "la sortie d'aiguillage".

Un aiguillage est dit de type talonnable quand le passage du côté talon en provenance de l'une ou l'autre voie directe ou déviée est possible sans dérailler. Ainsi, l'aiguillage permet le passage dans tous les cas d'un véhicule le franchissant par le talon quelle que soit la voie d'où il vient.

L'aiguillage est dit talonnable renversable lorsqu'après le talonnage, il conserve la direction dans laquelle il a été amené par les galets du véhicule. Inversement, il est dit talonnable non renversable lorsqu'après le talonnage, il reprend sa position initiale.

L'utilisation d'un système talonnable empêche le véhicule de dérailler car il assure la continuité du guidage même lors d'un mauvais positionnement de l'organe mobile d'orientation de l'aiguillage et même lorsque les feux de sécurité n'ont pas fonctionné. Cependant, l'emploi d'un système talonnable prive la partie mécanique d'un dispositif de verrouillage permettant de fixer chaque position envisagée pour l'aiguillage.

Le talonnage constitue donc une sécurité supplémentaire évitant le déraillement.

Le mouvement de déplacement latéral de l'organe mobile d'orientation portant l'ensemble à déplacer d'un aiguillage peut être obtenu par différents systèmes mécaniques motorisés connus et généralement commandés à distance.

Il en existe de nombreux dans le domaine ferroviaire. Ceux-ci diffèrent de l'invention car il s'agit ici d'un circuit de guidage sur monorail pour un véhicule routier et non pas, comme dans le domaine ferroviaire, d'un circuit de circulation de véhicules ferroviaires.

Concernant les ensembles de guidage à galet(s) sur circuit monorail pour véhicules routiers, le mouvement de l'organe mobile d'orientation d'un aiguillage talonnable peut être réalisé par une poussée transversale engendrée par le contact défilant de butée du flanc d'une roue ou d'un galet de guidage roulant sur un des éléments de l'organe mobile d'orientation tout en frottant par son flanc sur le chant convergeant vers la pointe d'une plaque adjacente de couverture.

On connaît, à cet effet, par la demande européenne publiée sous le n° EP-A-0844329 au nom de SPIE ENERTRANS aujourd'hui abandonnée, un appareil de voie pour le changement de trajectoire d'un véhicule guidé par un ensemble de guidage à galet unique se déplaçant sur un rail.

Cet appareil de voie est recouvert par endroits, notamment sur une partie de la zone de manoeuvre du rail mobile, d'une plaque de couverture dont le chant extérieur convergeant vers l'entrée de l'aiguillage est utilisé comme profil d'actionnement en déplacement latéral du galet provoquant le déplacement latéral du rail sur lequel il roule et donc de l'organe mobile d'orientation de l'aiguillage.

Selon l'une des caractéristiques de cette invention, le flanc du galet de guidage entre pendant son roulement en contact de déplacement par butée avec le chant de la plaque de couverture adjacente convergeant vers l'entrée de l'aiguillage pour être décalé latéralement avec le rail mobile par ce mouvement moteur lors du franchissement de l'aiguillage par l'ensemble de guidage.

Selon la description et les caractéristiques revendiquées dans ce dépôt, ce galet est exclusivement du type à double mentonnet, ce qui lui impose une conformation de profil à deux flancs latéraux droits délimitant une bande centrale de roulement en cylindre.

L'effort important à fournir pour déplacer l'organe mobile d'orientation par le déplacement du rail de guidage sur lequel roule le galet, la forme exclusive de profil du galet de guidage et la disposition de son chant plat parallèle au chant adjacent de la plaque de couverture ne permettent pas d'obtenir entièrement et de façon répétitive le résultat visé.

En effet le galet, lors de son déplacement en contact de butée contre et le long du chant adjacent de la plaque de couverture, a fortement tendance d'abord à se soulever, puis à mordre sur le chant adjacent de la bordure, ensuite à monter sur la bordure et sur le rail et même à s'échapper du rail rendant l'aiguillage peu fiable dans son fonctionnement, ce qui est contraire aux règles de base de la sécurité du guidage et par-là même du transport.

Une précontrainte en appui du galet sur le rail ne peut apporter l'amélioration escomptée car les efforts de sollicitation du galet vers le haut étant trop importants ne peuvent être neutralisés par une force d'appui dont l'intensité est nécessairement limitée par des considérations d'ordre technique.

Cet inconvénient majeur est connu du déposant car il prévoit un graissage des surfaces en contact de poussée. Malheureusement, le graissage ne peut présenter un caractère permanent pour des dispositifs extérieurs soumis aux intempéries. Entraînant une mise en condition répétitive et fréquente, il ne peut convenir dans le cadre d'une exploitation industrielle.

La difficulté de trouver une solution efficace au problème posé vient du fait que le galet de guidage roulant sur le rail de l'organe mobile d'orientation doit le déplacer latéralement par le seul travail d'une poussée de réaction à son contact défilant sur et le long du chant transversal de la plaque adjacente.

La présente invention permet d'éviter tous les inconvénients mentionnés ci-dessus.

Elle a pour but de permettre le passage de l'aiguillage du côté talon en provenance de l'une ou de l'autre voie directe ou déviée à partir d'un ensemble de guidage par galets roulant sur un monorail selon lequel le rabattement nécessaire du rail s'effectue automatiquement et de façon sûre par le seul passage de l'ensemble de guidage.

A cet effet, l'invention se rapporte à un dispositif mécanique automatique de rabattement de l'organe mobile d'orientation d'un aiguillage selon la revendication 1.

Ainsi, les bordures directrices en plan incliné ou en biseau utilisées pour le travail dynamique de réaction-poussée latérale permettent d'éviter la tendance à monter du galet en raison du contact de poussée en biais avec le flanc ou la surface latérale extérieure du galet, elle-même inclinée. Ce flanc incliné décompose la force latérale de réaction-poussée en une composante forte de poussée latérale du rail mobile et non pas, comme dans la réalisation antérieure, en un effort d'échappement du rail vers le haut.

Elle réalise ainsi automatiquement et en toutes circonstances une véritable poussée latérale du rail en vue de son déplacement horizontal nécessaire au bon fonctionnement de l'aiguillage.

Par ailleurs, il n'est nullement indispensable de charger l'ensemble de guidage à galets pour qu'il ne se soulève pas, car la composante verticale est compensée en permanence en raison de la géométrie de l'ensemble. On facile ainsi le roulage de celui-ci et surtout le déplacement de l'organe mobile d'orientation de l'aiguillage.

D'autres caractéristiques et avantages de l'invention apparaîtront dans la description qui suit, donnée à titre d'exemple et accompagnée des dessins dans lesquels :

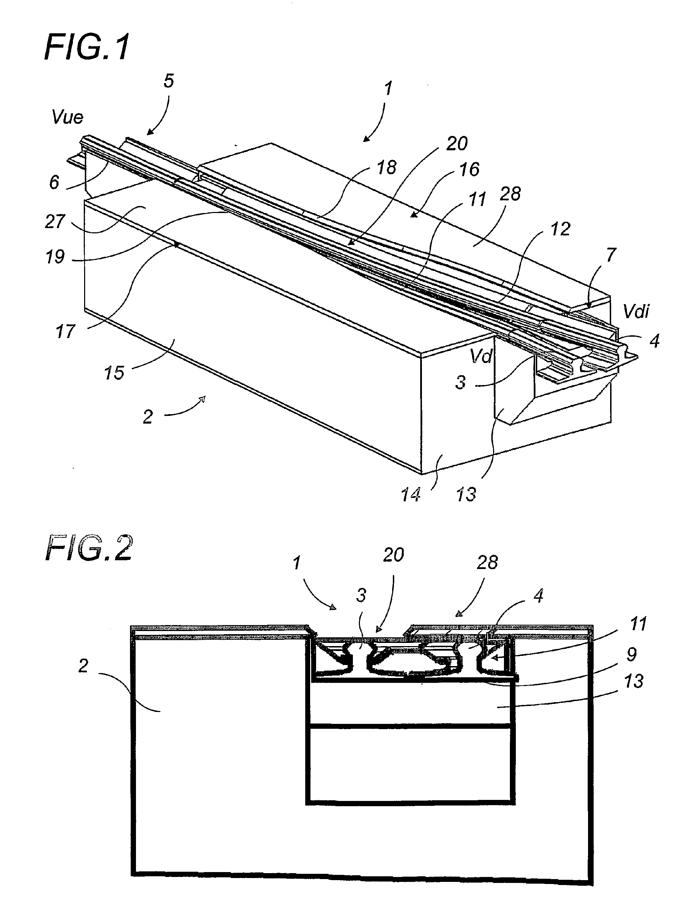

- la figure 1 est une vue schématique en perspective d'un ensemble d'aiguillage comportant le dispositif selon l'invention pour le déplacement latéral de l'ensemble mobile,
- la figure 2 est une vue en élévation de l'avant de la figure 1,

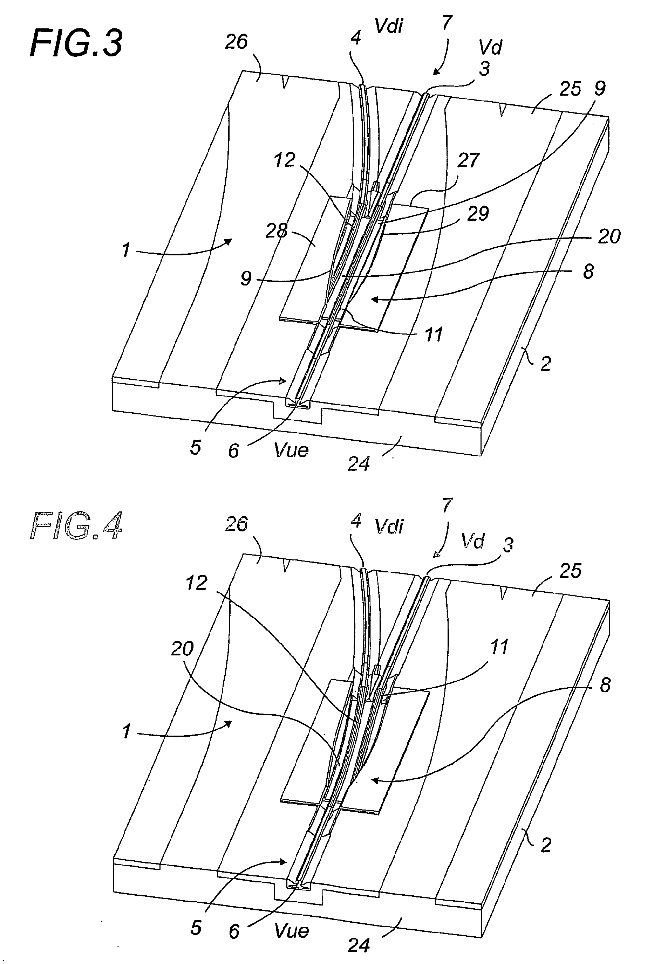

- les figures 3 et 4 sont des vues schématiques simplifiées en perspective de l'aiguillage et de son environnement sans galet de guidage respectivement dans le cas de franchissement par la voie directe et par la voie déviée,

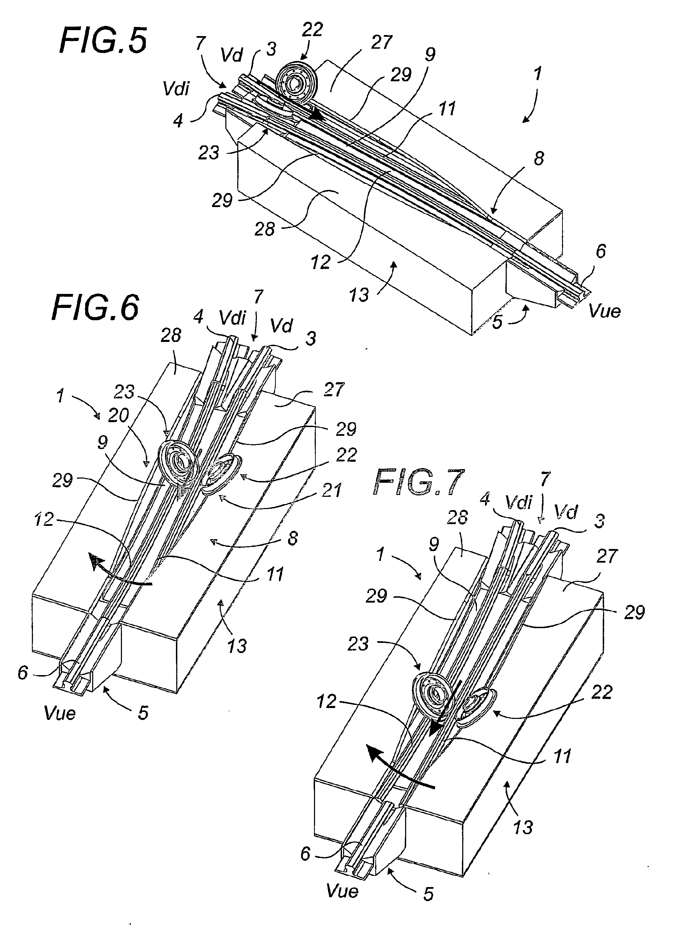

- les figures 5, 6 et 7 sont des vues schématiques simplifiées en perspective montrant le travail du galet pour passer dans la configuration de voie directe en position initiale puis en position intermédiaire,
- les figures 8 et 9 sont des vues en perspective représentant des agrandissements respectivement de la zone au niveau des galets et de la zone de pointe de la figure 6,
- la figure 10 est une représentation schématique des galets de guidage et du rail illustrant les forces en jeu.

Le dispositif mécanique automatique de rabattement de l'organe mobile d'orientation d'un aiguillage selon l'invention s'intègre dans un aiguillage 1 talonnable comportant un soubassement 2 sur lequel sont montés le rail 3 d'une voie directe Vd et le rail 4 d'une voie déviée Vdi. Selon le principe général des aiguillages, le côté entrée est appelé la pointe 5 avec un rail unique 6 d'une voie unique d'entrée Vue et le côté sortie appelé le talon 7 qui présente ici les deux rails 3 et 4 dans leur amorce vers le circuit par la voie directe Vd et par la voie déviée Vdi. Entre la pointe 5 et le talon 7 s'étend la partie centrale 8 de l'aiguillage 1 comprenant un bloc fonctionnel mobile. Cette partie centrale se matérialise généralement sous la forme d'un organe mobile d'orientation 9 composé essentiellement d'une platine mobile 10 portant deux rails de raccordement 11 et 12, c'est-à-dire un tronçon de raccordement reliant le rail unique 6 de la voie unique d'entrée Vue à l'un ou l'autre rail 3 ou 4 des deux voies de sortie, la voie directe Vd ou la voie déviée Vdi. Cet organe mobile d'orientation 9 est déplaçable entre deux positions correspondant au franchissement de l'aiguillage de la voie unique d'entrée Vue d'une part vers la voie directe Vd et d'autre part vers la voie déviée Vdi et inversement.

L'invention s'applique principalement aux aiguillages 1 de type talonnable c'est-à-dire à ceux qui se distinguent par un accès possible côté talon 7 par l'une ou l'autre voie directe Vd ou déviée Vdi sans possibilité de déraillement.

L'aiguillage 1 se présente sous la forme d'un ensemble mécanique enfermé dans un caisson 13 formé de plaques de protection latérales et inférieures telles que 14 et 15 fermé en partie supérieure par l'organe mobile d'orientation 9 et recouvert partiellement de plaques supérieures de couverture 16 et 17 délimitant entre elles et plus précisément entre chacune de leur bordure longitudinale 18 et 19 un espace de circulation 20 ouvert vers le haut et le long duquel passe, en roulant sur le rail pour franchir l'aiguillage dans un sens ou dans l'autre, un ensemble de guidage 21 à un couple et deux galets 22 et 23 d'un véhicule routier guidé. Le caisson 13 comporte des arrivées de liaisons de commande et d'énergie par exemple électriques et mécaniques et des départs de lignes de détection et de surveillance, ainsi que diverses évacuations et admissions propres aux contraintes météorologiques qui ne concernent pas directement la présente invention.

Le caisson 13 renferme également divers dispositifs de commande et d'actionnement dont il ne sera question ici que dans leur fonction générale.

Le caisson 13 est intégré dans une structure de chaussée 24 comportant des zones de roulage du véhicule routier ou pistes 25 et 26 correspondant respectivement aux voies directe Vd et déviée Vdi.

Selon l'invention, l'ensemble de guidage 21 du véhicule routier, c'est-à-dire d'un véhicule sur pneus, possède de préférence deux galets 22 et 23 et ceux-ci sont disposés inclinés l'un vers l'autre en V à pointe dirigée vers le bas. L'ensemble de guidage 21 se déplace par le roulage des galets 22 et 23 sur le monorail d'un circuit de guidage dans lequel est inséré au moins un aiguillage 1 du type de celui décrit.

L'aiguillage 1 comporte en partie supérieure le long de l'espace de circulation 20 et bordant celui-ci une plaque droite et une plaque gauche de couverture 16 et 17 présentant chacune une bordure longitudinale directrice profilée telle que respectivement 27 et 28 présentant chacune un chant 29 de butée coulissante qui affecte une forme adaptée au flanc incliné externe 30 ou 31 du galet incliné 22 ou 23 qui se trouve en regard et un tracé par exemple de forme curviligne progressive comme représenté sur les figures, convergeant vers l'entrée unique Vue et ceci du talon 7 vers la pointe 5 sur au moins une partie de sa longueur.

Ceci permet d'obtenir un effort progressif sur le rail de raccordement en optimisant au mieux les bras de levier exercés par les galets.

Le chant 29 de butée coulissante de chacune de ces bordures directrices 27 et 28 a pour but de contraindre, après prise de contact, le galet incliné qui se trouve en regard, c'est-à-dire celui dont le flanc extérieur incliné arrive en contact avec ce chant 29 de bordure directrice à une poussée latérale qui aura pour effet de déplacer latéralement le rail de raccordement correspondant et avec lui la platine mobile 10 qui le porte et donc l'organe d'orientation 9, et ceci jusque dans une position rabattue en prolongation du rail unique 6, position dans laquelle il assure le passage de l'aiguillage côté talon à partir de la voie principale Vd ou de la voie déviée Vdi.

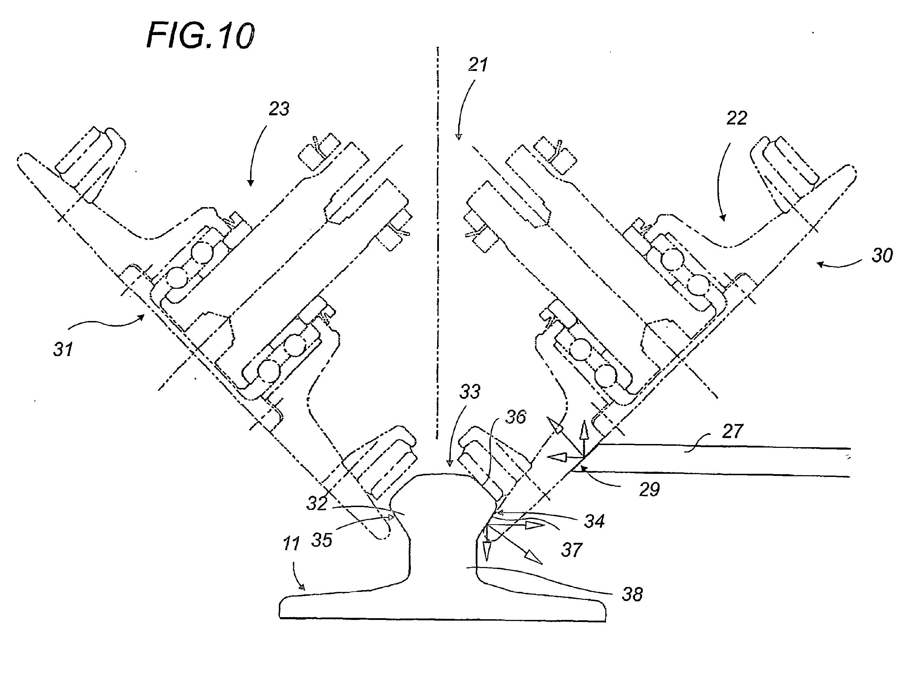

Selon le mode de réalisation préféré représenté sur la figure 10, l'ensemble de guidage comporte deux galets inclinés en V à pointe dirigée vers le bas, ces galets roulent chacun sur un chant latéral du monorail en raison de la forme de profil représentée sur les figures. Bien entendu, cette forme de profil ne conditionne pas l'invention et peut donc être modifiée, il suffit que les galets restent inclinés et que leur flanc externe coopère avec le chant 29 de butée coulissante en regard de la bordure directrice.

Ces galets inclinés sont identiques et par exemple du type à simple mentonnet comme représenté sur les figures.

Ce chant 29 de chaque plaque de couverture formant une bordure directrice est incliné et de préférence parallèlement au flanc 30 ou 31 du galet incliné 22 ou 23 qui viendra en contact avec ce chant 29, et par exemple et de préférence selon la même inclinaison.

Les rails présentent une forme de profil adaptée à celle des galets. A titre d'exemple pour des galets inclinés du type à simple mentonnet comme représenté, le rail présentera un champignon 32 formé d'une table supérieure 33 et de deux flancs saillants 34 et 35, chacun à deux faces planes inclinées l'une supérieure 36 et l'autre inférieure 37 dont la forme revient vers le bas par la face inférieure 37 pour se terminer en arrondi dans une âme 38, comme représenté sur la figure 10.

Les galets inclinés 22 et 23 roulent sur ces flancs saillants 34 et 35. Chaque mentonnet forme une paroi de butée évitant grâce au rapprochement des galets et à leur disposition en V la sortie du rail par échappement vers le haut.

La force provenant de la poussée du contact défilant de poussée qui s'exerce par le chant 29 incliné de bordure sur le flanc externe 30 ou 31 du galet concerné 22 ou 23 est perpendiculaire à celui-ci. Cette force.se transmet au rail de raccordement et peut se décomposer en une force latérale de poussée sur le rail de raccordement correspondant et en une composante verticale de faible intensité, sans incidence notable sur le maintien des galets de guidage sur ce rail déplaçable.

Ainsi, et contrairement à la réalisation antérieure, le flanc externe et donc le galet qui le comporte ne sera sollicité que très faiblement en échappement vers le haut lors de la réaction de poussée, ceci en raison des surfaces en regard qui sont inclinées de préférence de la même façon que le chant en regard et parallèles et ne procurent par conséquent pratiquement que du glissement, c'est-à-dire aucune tendance sensible à faire monter le galet par exemple suite à la formation temporaire d'un point d'appui tournant.

Comme illustré par la figure 10, la poussée latérale conférée par le chant 29 de butée coulissante engendre, sur le flanc externe 30 du galet 22 de guidage en contact avec le rail, une force de poussée représentée par des flèches et dirigée au-delà du chant 29 perpendiculairement au flanc externe du galet 22. Cette force de poussée vient se reporter sur la partie inférieure 37 du flanc 34 en saillie correspondant du rail de guidage sous la forme d'une force de poussée latérale s'exerçant en biais sur ce flanc et engendrant une force de réaction plus faible que celle de la poussée comme représenté sur la figure afin d'assurer la force motrice du déplacement latéral.

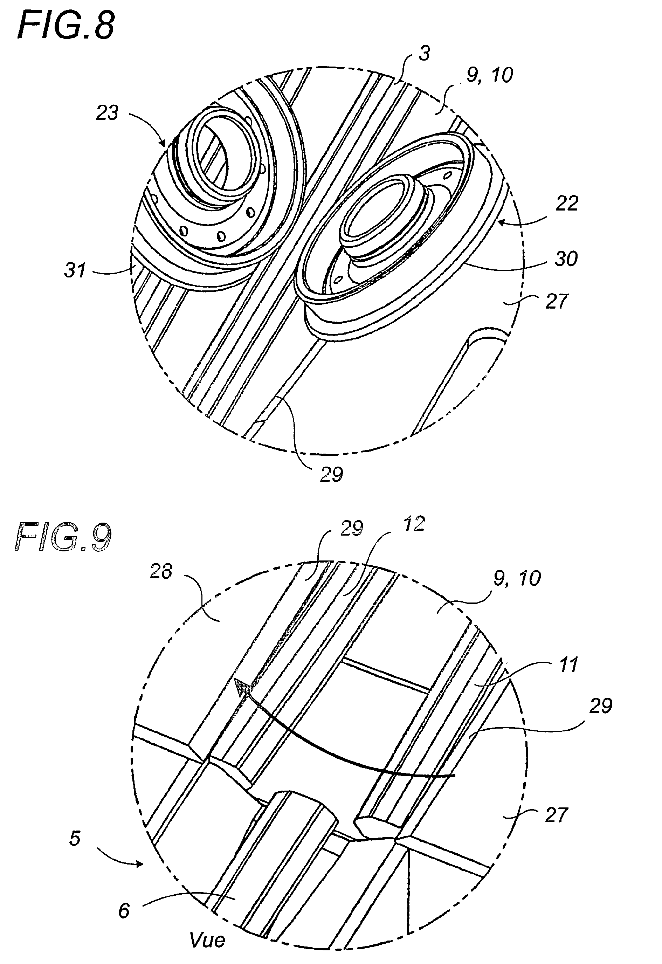

On remarque sur la figure 9 que la composante verticale des réactions de la bordure 27 correspondante sur le flanc externe 30 du galet 22 et celle de la réaction du rail sur le mentonnet du galet 22 s'équilibrent en permanence, ce qui permet de ne pas avoir à charger les galets par une force supplémentaire permanente et procure donc une fonction totalement fiable de guidage et une facilité de déplacement latéral de l'organe mobile d'orientation de l'aiguillage.

Pour assurer encore une meilleure stabilité des galets et ainsi une meilleure qualité et fiabilité du guidage, on peut soumettre l'ensemble de guidage 21 à une charge verticale vers le rail de guidage.

Dans la réalisation décrite, on prévoit un actionneur sous la forme par exemple d'un dispositif mécanique bistable à ressort qui assure un rappel en position initiale après le passage de l'ensemble de guidage ayant fait basculer l'ensemble mobile d'orientation dans l'autre position.

## Revendications

1. Dispositif mécanique automatique de rabattement de l'organe mobile d'orientation d'un aiguillage pour le circuit de guidage d'un véhicule routier comportant un aiguillage talonnable à organe mobile d'orientation (9) et à deux rails de raccordement (11, 12), ainsi qu'un ensemble de guidage (21) d'un véhicule routier à au moins un galet roulant sur un rail de guidage dans lequel le passage de l'ensemble de guidage (21) le long d'au moins une bordure directrice à chant (29) bordant un espace de circulation (20) réalise, par son avance, une poussée latérale de l'organe mobile d'orientation (9) de l'aiguillage talonnable à partir d'une voie directe Vd ou d'une voie déviée Vdi vers une voie unique d'entrée Vue **caractérisé en ce que** l'ensemble de guidage (21) du véhicule routier comporte deux galets inclinés (22, 23) à un seul mentonnet et **en ce que** le flanc externe (30, 31) du galet incliné de guidage (22, 23) roulant sur un des rails de raccordement (11, 12), rail à deux flancs latéraux saillants (34, 35), le plus près d'une des bordures directrices (27, 28) de l'espace de circulation (20) est apte à coopérer lors de son déplacement le long d'une partie de l'aiguillage avec le chant (29) qui est incliné, d'une des bordures directrices (27, 28) existant le long de l'organe mobile d'orientation (9) de l'aiguillage et portant les tronçons des rails de raccordement (11, 12), et **en ce que** le mentonnet du galet de guidage correspondant (22, 23) est apte à coopérer avec le flanc du rail de raccordement (11, 12) en regard, pour lui imprimer par son avance une poussée de déplacement latéral, cette bordure directrice (27, 28) présentant un tracé convergeant vers la pointe de l'aiguillage en vue du déplacement latéral de l'organe mobile d'orientation (9) par le seul effet de l'appui défilant du galet de guidage (22, 23) correspondant sur le chant (29) convergent de la bordure directrice adjacente (27, 28).

2. Dispositif de guidage automatique selon la revendication 1 **caractérisé en ce que** les flancs latéraux saillants (34, 35) des rails de guidage ou de raccordement (11, 12) sont formés chacun de deux faces planes inclinées l'une supérieure (36) et l'autre inférieure (37).

3. Dispositif de guidage automatique selon la revendication 1 **caractérisé en ce que** le tracé convergent de chaque bordure directrice (27, 28) est curviligne et progressif.

4. Dispositif de guidage automatique selon la revendication 1
**caractérisé en ce que** le chant incliné (29) est montant en éloignement du galet en regard.

5. Dispositif de guidage automatique selon la revendication précédente **caractérisé en ce que** le chant (29) est incliné de la même façon que le flanc externe du galet, c'est-à-dire parallèle à ce flanc.

6. Dispositif de guidage automatique selon la revendication 1 **caractérisé en ce que** la bordure directrice (27, 28) est convergente vers l'entrée de l'aiguillage selon un tracé présentant une partie curviligne.

7. Dispositif de guidage automatique selon la revendication précédente **caractérisé en ce que** la partie curviligne est progressivement convergente.

8. Dispositif de guidage automatique selon la revendication 1 **caractérisé en ce que** l'ensemble de guidage (21) est soumis à une charge verticale vers le rail de guidage.

9. Dispositif de guidage automatique selon l'une quelconque des revendications 1 ou 2 ou 3 **caractérisé en ce que** le rail de guidage présente deux flancs en saillie (34, 35) à deux faces (36, 37) sur la face supérieure desquels roule à chaque fois un galet (22, 23) et sur la face inférieure desquels vient en appui le mentonnet du galet incliné soumis à la poussée latérale provenant du contact défilant avec le chant (29) de la bordure directrice adjacente (27, 28).

## Claims

1. Automatic mechanical device for pushing away the mobile orientation device of a switch for the guide circuit of a road vehicle including a trailable spring switch with mobile orientation device (9) and two connection rails (11, 12), as well as a guide unit (21) of a road vehicle with at least one roller rolling on a guide rail in which the passage of the guide unit (21) along at least one guiding edge (29) bordering a circulation space (20) causes, by its advance, a side push of the mobile orientation device (9) of the trailable spring switch from a main line Vd or a branch line Vdi towards a single arrival track Vue, **characterized in that** the guide unit (21) of the road vehicle includes two inclined rollers (22, 23) with only one catch and **in that** the external side (30, 31) of the inclined guide roller (22, 23) rolling on one of the connection rails (11, 12), rail with two protruding lateral sides (34, 35), as near as possible to one of the guide edges (27, 28) of the circulation space (20), is able to co-operate at the time of its displacement along a part of the switch with the edge (29) which is inclined, of one of the guide edges (27, 28) existing along the mobile orientation device (9) of the switch and carrying the sections of connection rails (11, 12), and **in that** the catch of the corresponding guide roller (22, 23) is able to co-operate with the facing side of the connection rail (11, 12), for giving it, by its advance, a lateral displacement push, this guiding edge (27, 28) presenting a converging course towards the point of the switch in view of the lateral displacement of the mobile orientation device (9) only by the effect of the passing-by bearing of the corresponding guide roller (22, 23) on the converging edge (29) of the adjacent guiding edge (27, 28).

2. Automatic guide device according to claim 1 **characterized in that** the protruding lateral sides (34, 35) of the connection or guide rails (11, 12) are formed each by two inclined plane sides, a higher (36) and a lower one (37).

3. Automatic guide device according to claim 1 **characterized in that** the converging course of each guiding edge (27, 28) is progressive and curvilinear.

4. Automatic guide device according to claim 1 **characterized in that** the inclined edge (29) rises away from the opposite roller.

5. Automatic guide device according to the previous claim **characterized in that** the edge (29) is inclined in the same way as the external side of the roller, namely parallelly to this side.

6. Automatic guide device according to claim 1 **characterized in that** the guiding edge (27,(28) is convergent towards the entry of the switch according to a course presenting a curvilinear part.

7. Automatic guide device according to claim 10 **characterized in that** the curvilinear part is progressively convergent.

8. Automatic guide device according to claim 1 **characterized in that** the guide unit (21) is submitted to a vertical load towards the guide rail.

9. Automatic guide device according to any of the claims 1 or 2 or 3 **characterized in that** the guide rail presents two protruding sides (34, 35) with two faces (36, 37) on the upper face of which each time a roller (22, 23) rolls and on the lower face of which the catch of the inclined roller leans, submitted to the side push coming from the passing-by contact with the edge (29) of the adjacent guiding edge (27, 28).

## Patentansprüche

1. Automatische mechanische Vorrichtung zum beiseite Klappen des beweglichen Ausrichtmittels einer Weiche für die Führungsschiene eines Straßenfahrzeugs mit einer aufschneidende Weiche mit beweglichem Ausrichtmittel (9) und zwei Verbindungsschienen (11, 12), sowie einer Führungsanordnung (21) eines Straßenfahrzeugs mit mindestens einer Rolle, die auf einer Führungsschiene rollt, bei der der Durchgang der Führungsanordnung (21) entlang mindestens einem Leitrand mit Kante (29), der einen Verkehrsraum (20) umrandet, durch ihr Vorrücken einen seitlichen Schub des beweglichen Ausrichtmittels (9) der aufschneidende Weiche von einem Stammgleis Vd oder von einem Zweiggleis Vdi zu einem einzigen Einfahrgleis Vue bewirkt, **gekennzeichnet dadurch, dass** die Führungsanordnung (21) des Straßenfahrzeugs zwei schräge Laufrollen (22, 23) mit einem einzigen Feststeller umfasst, sowie **dadurch**, dass die Außenseite (30, 31) der schrägen Führungsrolle (22, 23), die auf einer der Verbindungsschienen (11, 12) rollt, Schiene mit zwei überstehenden Seiten (34, 35), so nahe wie möglich an einem der Leitränder (27, 28) des Verkehrsraums (20), in der Lage ist, bei ihrer Bewegung entlang eines Teils der Weiche mit der schrägen Kante (29) eines der Leitränder (27, 28) zusammenzuwirken, die entlang des beweglichen Ausrichtmittels (9) der Weiche vorhanden sind und die Teilstücke der Verbindungsschienen (11, 12) tragen, sowie **dadurch**, dass der Feststeller der entsprechenden Führungsrolle in der Lage ist, mit der Seite der gegenüberliegenden Verbindungsschiene (11, 12) zusammenzuwirken, um ihr durch sein Vorrücken einen seitlichen Bewegungsschub zu versetzen, wobei dieser Leitrand (27, 28) eine Trasse aufweist, die zur Spitze der Weiche hin zusammenläuft, in Hinblick auf die seitliche Bewegung des beweglichen Ausrichtmittels (9) nur durch die Wirkung des vorübergehenden Aufliegens der entsprechenden Führungsrolle (22, 23) auf der konvergierenden Kante (29) des angrenzenden Leitrandes (27, 28).

2. Automatische Führungsvorrichtung nach Anspruch 1, **gekennzeichnet dadurch, dass** die überstehenden Seiten (34, 35) der Führungs- oder Verbindungsschienen (11, 12) von je zwei ebenen geneigten Seiten gebildet werden, einer oberen (36) und einer unteren (37).

3. Automatische Führungsvorrichtung nach Anspruch 1, **gekennzeichnet dadurch, dass** die konvergierende Trasse jedes Leitrands (27, 28) kurvenförmig und schrittweise fortschreitend ist.

4. Automatische Führungsvorrichtung nach Anspruch 1, **gekennzeichnet dadurch, dass** die schräge Kante (29) mit der Entfernung von der gegenüberliegenden Rolle ansteigt.

5. Automatische Führungsvorrichtung nach dem vorherigen Anspruch, **gekennzeichnet dadurch, dass** die Kante (29) auf die gleiche Weise geneigt ist wie die Außenseite der Rolle, das heißt parallel zu dieser Seite.

6. Automatische Führungsvorrichtung nach Anspruch 1, **gekennzeichnet dadurch dass** der Leitrand (27, (28) nach einer Trasse mit einem kurvenförmigen Teil zum Eintritt der Weiche hin konvergiert.

7. Automatische Führungsvorrichtung nach dem vorherigen Anspruch, **gekennzeichnet dadurch, dass** das kurvenförmige Teil allmählich konvergiert.

8. Automatische Führungsvorrichtung nach Anspruch 1, **gekennzeichnet dadurch, dass** der Führungsanordnung (21) eine vertikale Last zu der Führungsschiene hin auferlegt wird.

9. Automatische Führungsvorrichtung nach einem beliebigen der Patentansprüche 1 oder 2 oder 3, **gekennzeichnet dadurch, dass** die Führungsschiene zwei überstehende Flanken (34, 35) mit zwei Seiten (36, 37) aufweist, auf deren Oberseite jedesmal eine Rolle (22, 23) rollt und auf deren Unterseite sich der Feststeller der Rolle stützt, der dem seitlichen Schub unterworfen ist, der vom Kontakt herkommt, der mit der Kante (29) des angrenzenden Leitrandes (27, 28) vorbeizieht.
